(19) Europäisches Patentamt

European Patent Office

Office européen des brevets

(11) Publication number: **0 117 124 B1**

## EUROPEAN PATENT SPECIFICATION

(45) Date of publication of patent specification: 17.04.91  (51) Int. Cl.⁵: **G06F 15/30**, G07F 7/10

(21) Application number: **84300976.2**

(22) Date of filing: **15.02.84**

(54) **Transaction safety system.**

(30) Priority: **18.02.83 JP 25728/83**

(43) Date of publication of application:
**29.08.84 Bulletin 84/35**

(45) Publication of the grant of the patent:
**17.04.91 Bulletin 91/16**

(84) Designated Contracting States:
**AT DE FR GB**

(56) References cited:
**DE-A- 2 645 645**
**DE-A- 2 929 754**
**US-A- 4 219 151**
**US-A- 4 234 932**

(73) Proprietor: **FUJITSU LIMITED**
**1015, Kamikodanaka Nakahara-ku**
**Kawasaki-shi Kanagawa 211(JP)**

(72) Inventor: **Kuroki, Akira**
**1405, Omaru**
**Inagi-shi Tokyo 206(JP)**
Inventor: **Ochiai, Satoru**
**1405, Omaru**
**Inagi-shi Tokyo 206(JP)**

(74) Representative: **Rackham, Stephen Neil et al**
**GILL JENNINGS & EVERY 53-64 Chancery**
**Lane**
**London WC2A 1HN(GB)**

## Description

This invention relates to a transaction safety system for securing the safety of a monetary transaction in a system for monetary circulation.

When the staff of banks etc., visit clients to carry out a monetary transaction, they carry a portable monetary transaction device. This enables the staff to carry out the processing of any monetary transaction with their clients immediately from the client's premises, and a passbook in which a deposited value and a balance are printed out is delivered to the client on the spot. This portable monetary transaction device is connected, via an acoustic coupler and a telephone line, to a central processing unit so that the monetary transaction process (the process of indicating that funds have been received) is carried out immediately the central processing unit receives the input data. After the monetary transaction process is completed, data sent back from the central processing unit is printed out in the passbook by a printer incorporated in the device. This processing by a portable monetary transaction device is normally carried out by the client-liaison staff of a bank, and there is always a possibility of the staff being forced by a person with criminal intent, whether at the client's premises or during the journey to visit the client, to carry out the processing of a false receipt of non-existent funds. That is, to be forced to print out in the bank passbook an amount received without receiving this amount. Such a crime cannot be prevented by the conventional monetary transaction systems one of which is described in GB-A-1517866.

According to this invention a safety system for a transaction system in which a transaction device having an input portion, an output portion and a remote processing device having a client file are connected by a circuit so that the processing device processes data fed from the transaction device; is characterised by means in the transaction device for sending an alarm signal when an improper transaction is carried out; controlling means for operating the alarm signal sending means when special code data are received from the input portion; a monitoring device geographically separated from the transaction device for monitoring the transaction device and outputting an alarm indication upon receipt of the alarm signal; and, result sending means for sending to the output portion of the transaction device the transaction result depending upon the transaction data supplied by the input portion regardless of whether the transaction data includes the alarm signal.

Thus, as is clear from the above, in the event that the client liaison staff of a bank, when carrying a portable monetary transaction device, are forced by a person of criminal intent to process the receipt of non-existent funds, the staff can secretly feed a special code, such as (99 * 99), into the transaction device during the process of operating the device, i.e. during the process of inputting the funds-received data (account number, funds received, etc.) as part of the regular monetary transaction process. The central processing unit which receives the special code will not renew the account file, and will send back a false funds-received processing text (funds received, renewed balance etc.) in such a way that the criminal will assume that the file has been renewed. That is, the data are printed out in the bank passbook by the monetary transaction device, which receives the false funds-received processing text as if the processing of the funds received is completed in a normal manner, thereby ensuring the safety of the client-liaison staff. Later, when the criminal attempts to withdraw funds from the bank by using the false funds-received processing text printed out in the passbook, not only will it be impossible to withdraw funds from the bank, but also the fact that a crime has been committed will be exposed.

An embodiment of the invention will now be described, by way of example, with reference to the accompanying drawings, in which

Figure 1 is a block schematic diagram of a system for monetary transaction in which the present invention is applied;

Figure 2 is a pictorial view of a portable terminal forming part of the system;

Figure 3 shows a keyboard arrangement in the transaction safety system;

Figure 4 is a block diagram of the transaction safety system according to the present invention;

Figure 5 is a block diagram showing a configuration of the transaction device shown in Figure 4;

Figure 6 is a block diagram showing a configuration of a data processing centre in the system of Figure 4;

Figure 7A shows a client file and Figure 7B shows an error log file, both used in the apparatus of Figure 6;

Figures 8A and 8B are block diagrams illustrating one example of an ordinary deposit receipt/payment operation;

Figure 9A is a flow chart illustrating the operation of the system for a monetary transaction; Figure 9B is a flow chart showing the inputting of the data of the transaction into the terminal side shown in Figure 9A; and

Figure 10 is a flow chart illustrating the operation of the system for the monetary transaction in the centre side shown in Figure 9A.

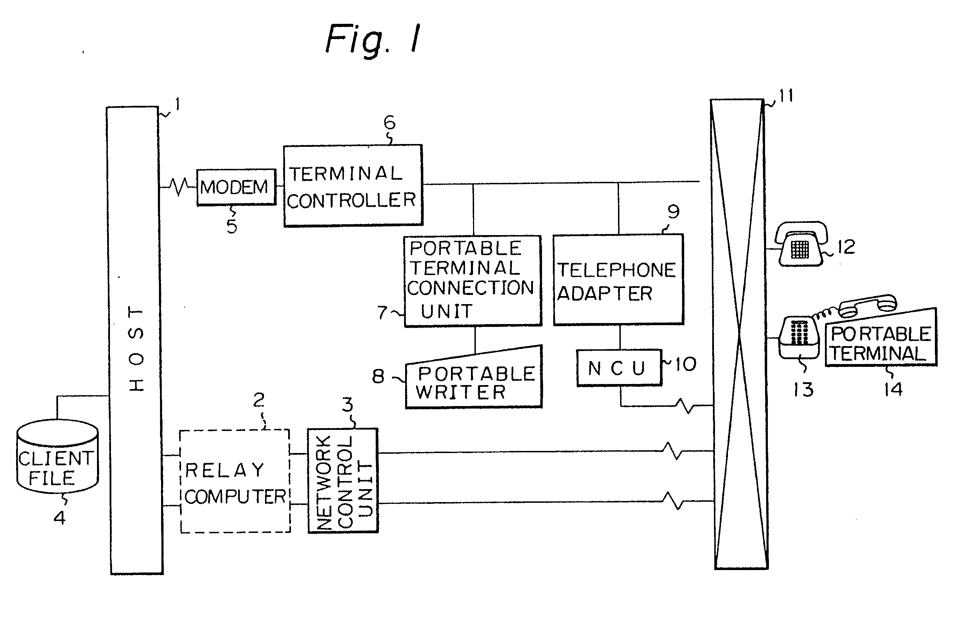

Figure 1 shows the system for monetary transaction in which a host computer 1, a relay computer 2, a network control unit 3, and a client file 4 are provided in the main office of a bank or business centre, and a modem 5, a terminal controller 6, a portable terminal connection unit 7, a portable writer 8, a telephone adapter 9, and a network control unit 10 are provided in a branch office of the bank. A telephone exchange 11 is connected to the main office and to the branch office of the bank, and is further connected to a subscriber's telephone 12 (or via a subscriber's telephone 13) to a portable terminal 14. This portable terminal 14 corresponds to the transaction device according to the present invention.

In the system shown in Figure 1, the portable writer 8 has the same functions as the portable terminal 14 provided in the branch office of the bank. The telephone exchange 11 can be connected either via the branch office of the bank or directly to the host computer 1.

As mentioned previously, because the portable terminal 14 is carried by the client-liaison staff of the banks, there is always a risk that the staff will be forced into processing the false receipt of non-existent funds, during a period when the staff are on the client's premises or when travelling between the bank and those premises.

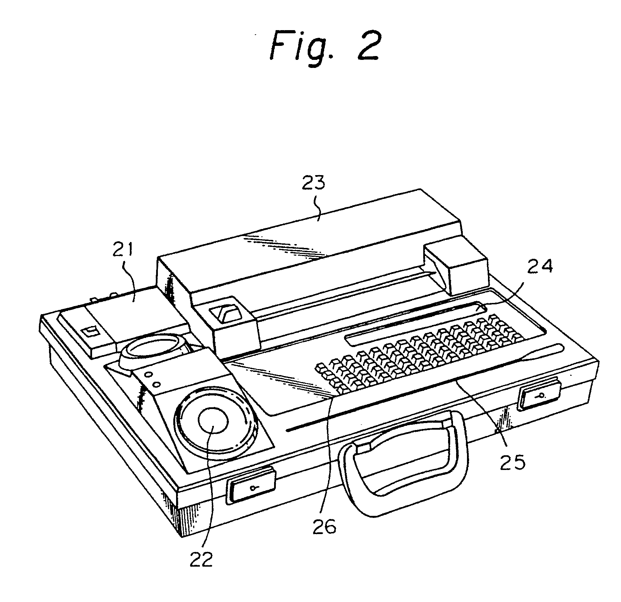

Figure 2 is an external view of the portable terminal shown in Figure 1. Figure 2 shows an electric power source (i.e. a battery) 21, an acoustic coupler 22, a printer inserter 23, a liquid crystal display 24, a magnetic card read-out portion (a magnetic passbook read/write portion) 25 and a keyboard portion 26.

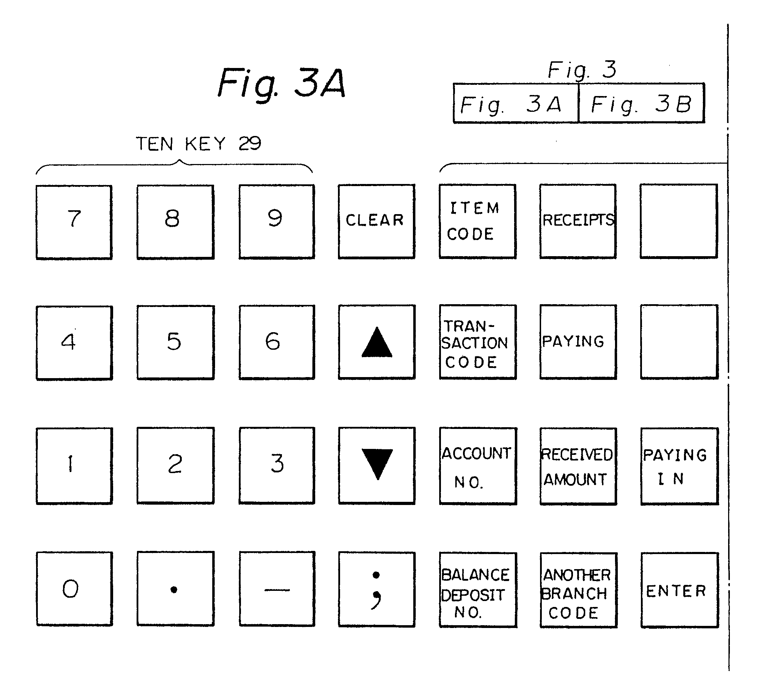

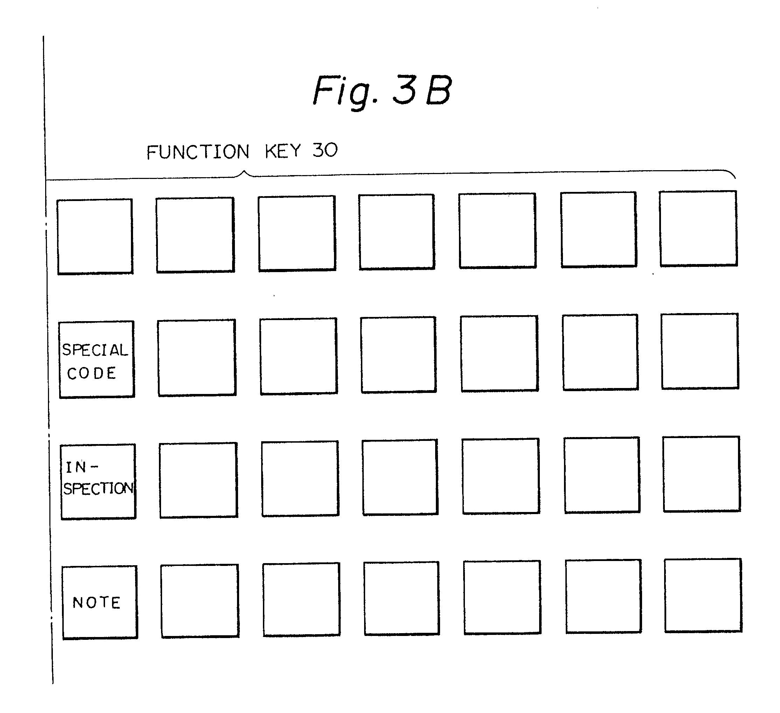

Figure 3 shows a keyboard arrangement for the portable terminal shown in Figure 2. The keyboard arrangement includes a digit key portion 29 and a function key portion 30.

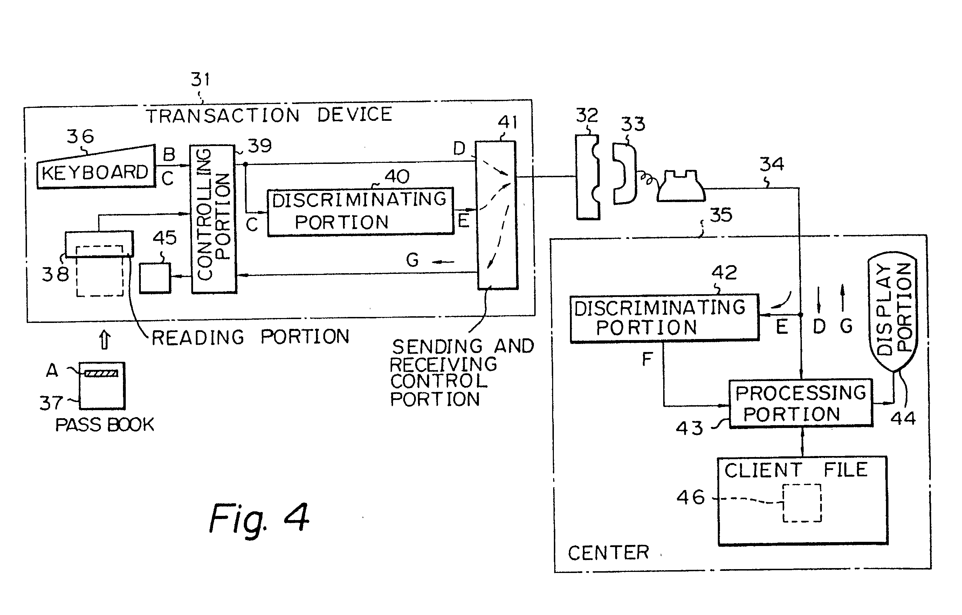

Figure 4 is a block diagram of a transaction safety system according to the present invention. In Figure 4, a transaction device 31 includes a keyboard 36, a read portion 38 which reads a passbook 37, a control portion 39, a discriminating portion 40, and a sending and receiving control portion 41. The output of the transaction device 31 is coupled via a acoustic coupler 32 and a telephone handset 33 to a telephone line 34 and a data processing centre 35.

The centre 35 includes a discriminating portion 42, a processing portion 43, a display portion 44, and a client file 46.

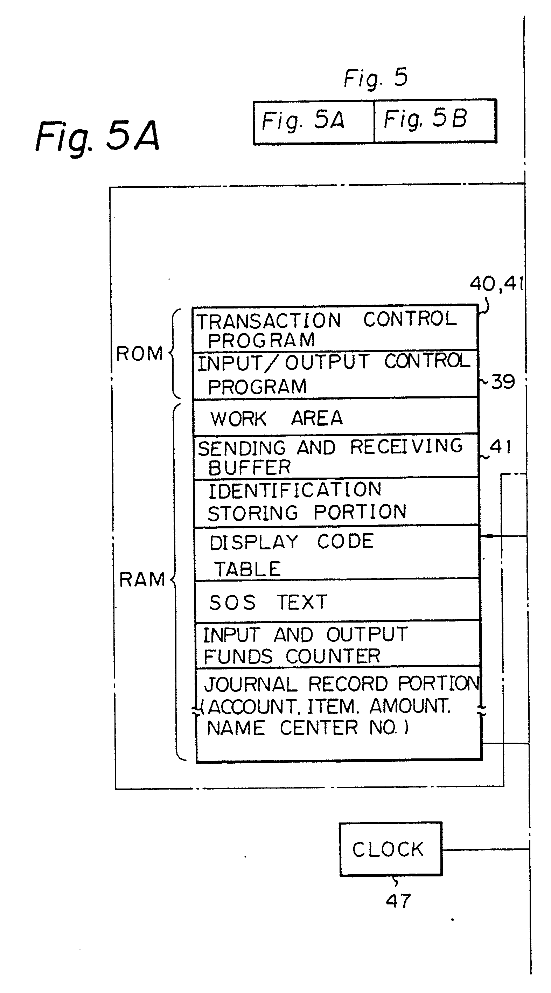

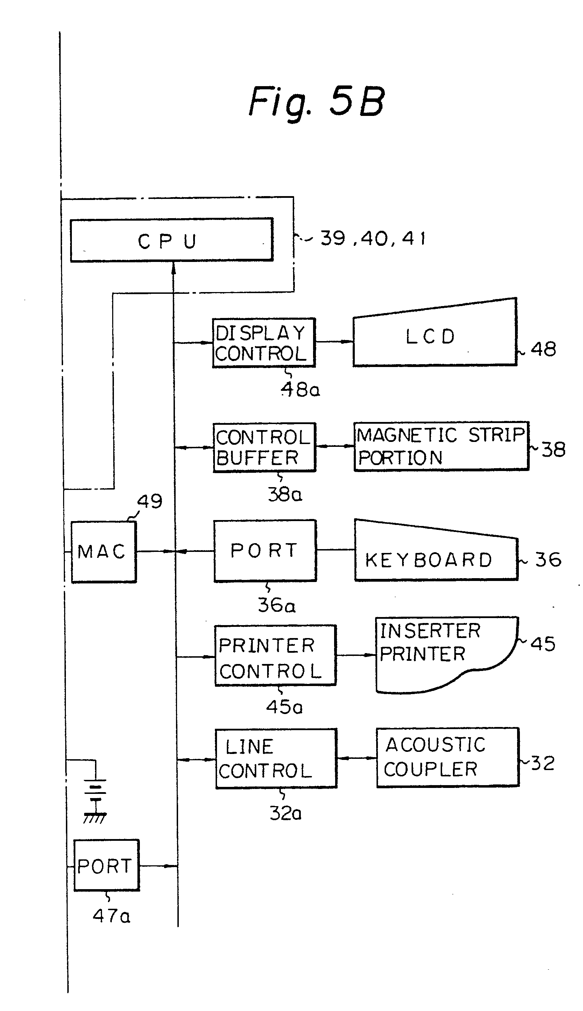

Figure 5 shows a block diagram of the construction of the transaction device 31 shown in Figure 4. As shown in Figure 5, the control portion 39 and the discriminating portion 40 include a transaction control program, an input/output control program, a work area, a sending and receiving buffer, an identification storing portion, an SOS text, an input/output funds counter, and a journal record portion (for recording an account, an item, an amount, a name, and a centre number). The control portion 39, the discriminating portion 40, and a sending and receiving portion 41 are connected via a memory access controller 49 to a computer bus line. The computer bus line is connected via a display control 48a to a liquid crystal display portion 48. This connection is made via a control buffer 38a to a magnetic strip read/write portion 38, via a port 36a to a keyboard 36, via a printer control portion 45a to an inserter printer 45, via a line control portion 32a to an acoustic coupler 32, and via an input/output port 47a to a clock 47.

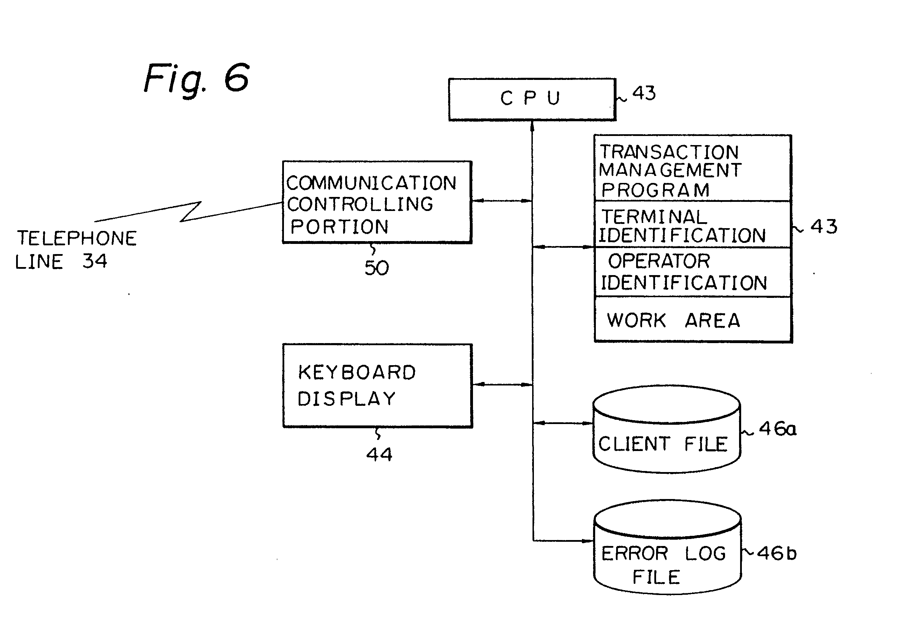

Figure 6 shows a block diagram of the construction of the center 35 shown in Fig. 4. As shown in Fig. 6, the processing portion 43 includes a computer, a transaction management program, a terminal identification, an operator identification, and a work area. A keyboard display 44 is formed by a liquid crystal display, and a client file shown in Fig. 4 is formed by an ordinal client file 46a and an error log file 46b. The center 35 is connected via a telecommunication control portion 50 to a telephone line 34.

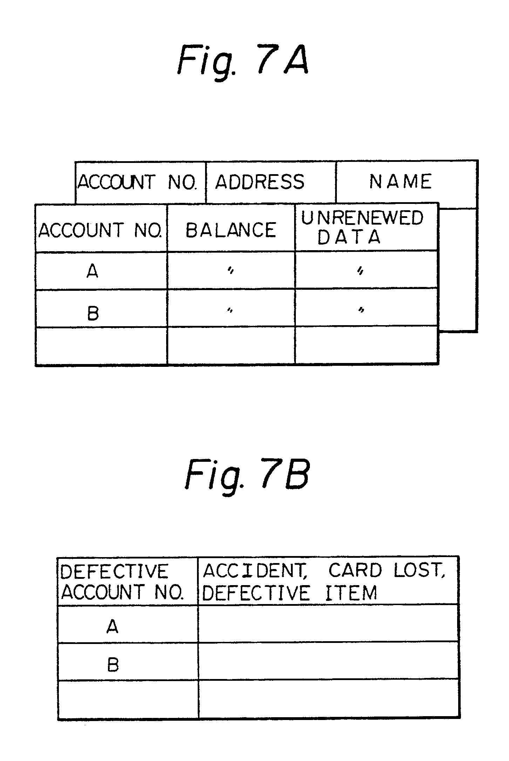

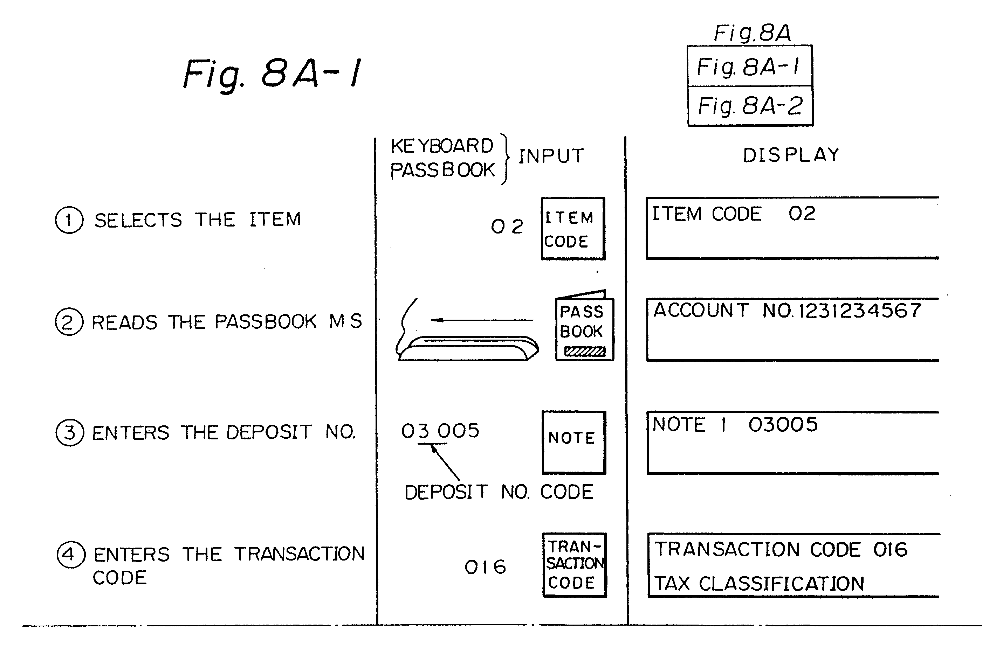

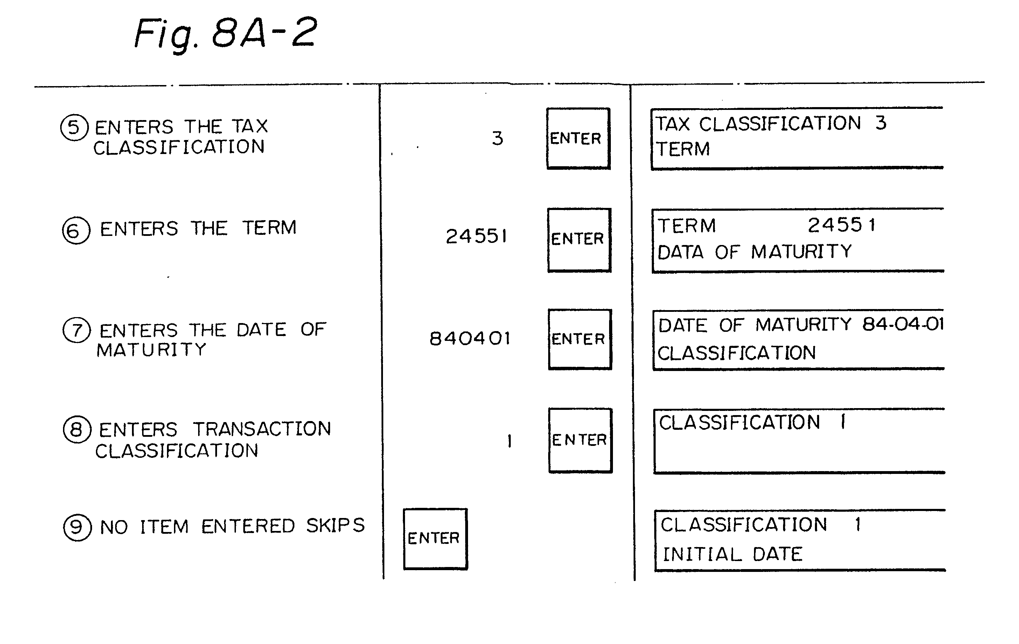

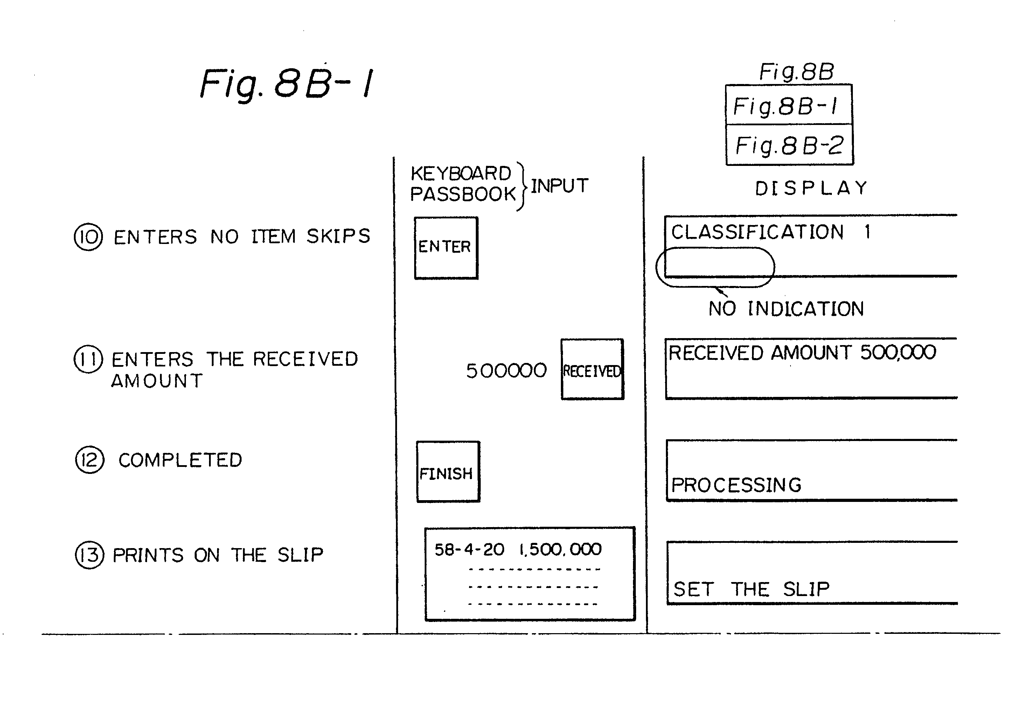

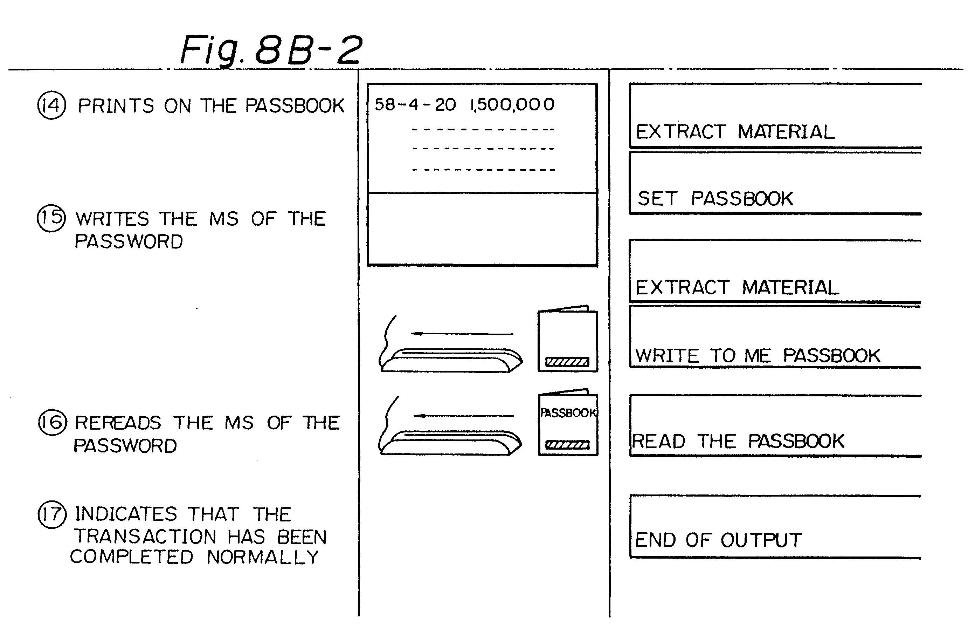

The client file 46a is formed, as shown in Figure 7A, by an account number, an address, a name, a balance, and unrenewed data. The error log file 46b is formed, as shown in Figure 7B, by a defective account number, such as an accident, card lost, or a defective item, etc. The client-liaison staff of a bank carry this portable monetary transaction device 31 as shown in Fig. 4, when visiting a client. When, during such a visit, the client proposes the transfer of funds to the bank (for example a deposit), the bank staff connects this portable monetary transaction device 31 to the center 35, so as to input the desired data and to process the amount of funds received to the center 35. Thus the passbook, in which the funds received is printed out and recorded, can be delivered to the client immediately. Figures 8A and 8B are block diagrams showing the operation of an ordinary receipt/payment process. As shown in Figs. 8A and 8B, the input process (for example a time deposit) is as follows:

① Selection of the item: specifying a fixed time deposit

② Reading the passbook: inserting the passbook into a reading portion and reading an identification code.

③ Inputting a deposit number: inputting a code indicating the deposit number and "NOTE I."

④ Inputting a transaction code: inputting the transaction code.

⑤ Inputting a tax classificatin: inputting the numerical data and "NOTE II."

⑥ Inputting a data of maturity: inputting the data giving the maturity date.

⑧ Inputting a transaction classification: specifying that the interest is added to the principal, etc.

⑨ Inputting funds received: inputting the data showing the amount of funds received.

In the event that the client-liaison staff of the bank encounter a person with criminal intent and are forced to process an imaginary amount of funds received, if the staff refuse to carry out this false processing, there is a great possibility that the personal safety of the staff will be endangered. Under this kind of pressure, obviously the staff will be obliged to connect the portable monetary transaction device 31 to the center 35 and input the data to the center 35 in accordance with the above process① ∼⑨ by operating the keyboard 36.

According to the present invention, in such a case the predetermined special code (SOS code, for example "99 * 99") is secretly input when the input of process ③ or ⑤ is carried out. This prevents any access to the client file 46 in the center 35. At the same time, the data for the false funds received is printed out in the passbook 37, and the passbook is delivered to the criminal.

In Fig. 4, after the client-liaison staff of the bank has operated the keyboard 36, e.g. to specify a fixed time deposit, the passbook 37 is inserted into the reading portion 38 of the monetary transaction device 31 in order to read out the identification code A. Next, when the deposit number code B is input from the keyboard 36, the special code C (for example, "99 * 99") is input. This special code C is fed via a control portion 39 to a discriminating portion 40. When the discriminating portion 40 discriminates this special code C, the discriminating portion 40 outputs an alarm signal E. Except for inputting the special code C, the client liaison-staff proceed to input the data in accordance with the input processes① ∼⑨ above. When the input of the data is completed, a sending and receiving control portion 41 sends the data of the false funds received D (in accordance with processes① ∼⑨ ) and the alarm signal E to the center 35. In the center 35, when the alarm signal E is included in the received data, a discriminating portion 42 discriminates this alarm signal E, and a control signal F is sent to a processing portion 43. When the processing portion 43 is determined as being in an abnormal state by a control signal F, the client account file 46 concerning the data of the funds received is not accessed, and a display portion 44 displays that an abnormal state has occurred. After that, the funds received, processing text G, which indicates that the processing concerning the funds D received is normally carried out, is sent back to the monetary transaction device 31. In the monetary transaction device 31, the funds received processing text G received in the sending and receiving portion 41 is sent to the controlling portion 39, so that a printer 45 prints out the data of the funds received and the data of the renewed balance etc., in the passbook 37. The client liaison staff of the bank can thus escape from a difficult position by delivering this passbook to the person who has forced the staff to input an imaginary amount of funds.

When the criminal tries to withdraw the funds by using this passbook, in which the input of the funds is written, the crime is immediately discovered, as an abnormal condition data is registered in the bank computer system concerning the account number of this passbook.

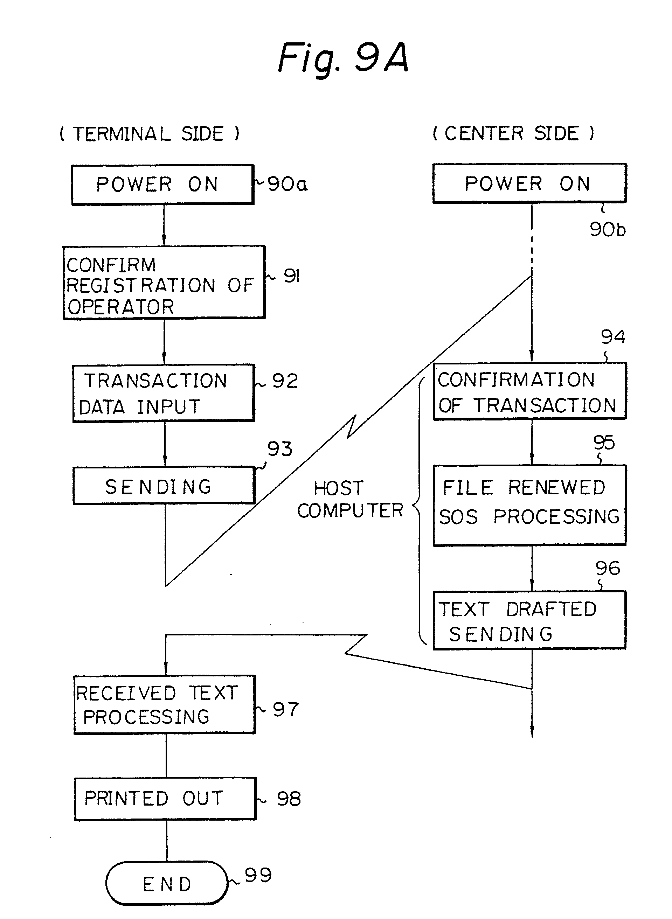

Figure 9A is a flow chart of the operation of the monetary transaction system. Block 91 confirms the registration of the operator and, when the operator is registered, the transaction data is input to block 92, and sent to the center side by block 93. In the center side, a block 94 examines the transaction and the account file is renewed in block 95, where the special code (SOS code) is processed. In block 96, the processing text is drafted and sent to a received text process 97 in the terminal side. The processed text in the block 97 is printed out in block 98 and the processing is ended.

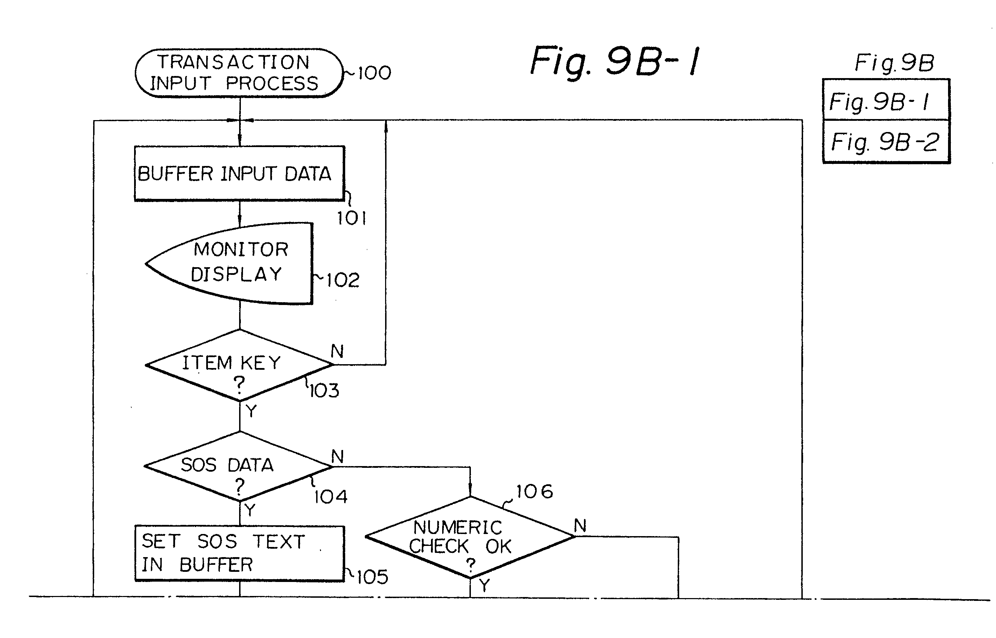

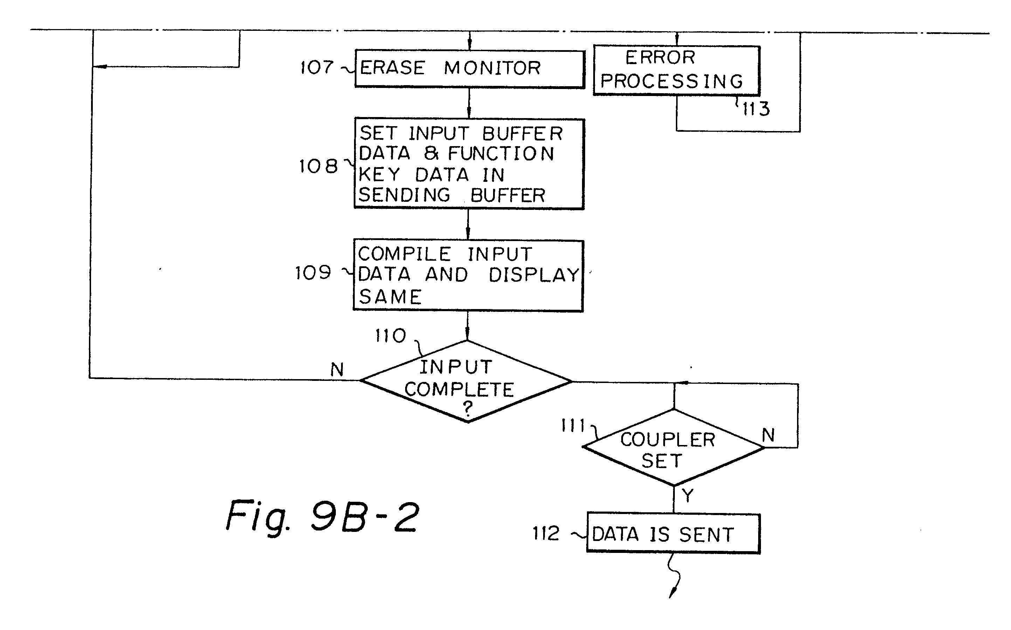

Figure 9B is a flow chart showing the input of the transaction in Fig. 9A. An input data of a transaction input 100 is buffered in block 101 (a sending buffer), is monitor displayed in block 102, and the displayed item is examined in block 103 to determine whether or not it is a function key operation. When the item is a function key operation, the output of block 103 is sent to block 104 where it is examined to determine whether or not the special code is included. When the special code is included, it is set in the sending buffer 101. When the special code is not included in block 104, the numeric data is checked in block 106. When the numeric data is good, the monitor is erased in block 107, and the data of the input buffer and the function key data is set in the sending buffer in block 108. The input data is compiled and displayed in block 109, and is examined to determine whether or not the input is complete in block 110. When the input is complete, the data is fed to the coupler in block 111. In block 112, the data is then sent to the center. When block 106 judges that the numeric data is defective, an error processing is effected via block 113.

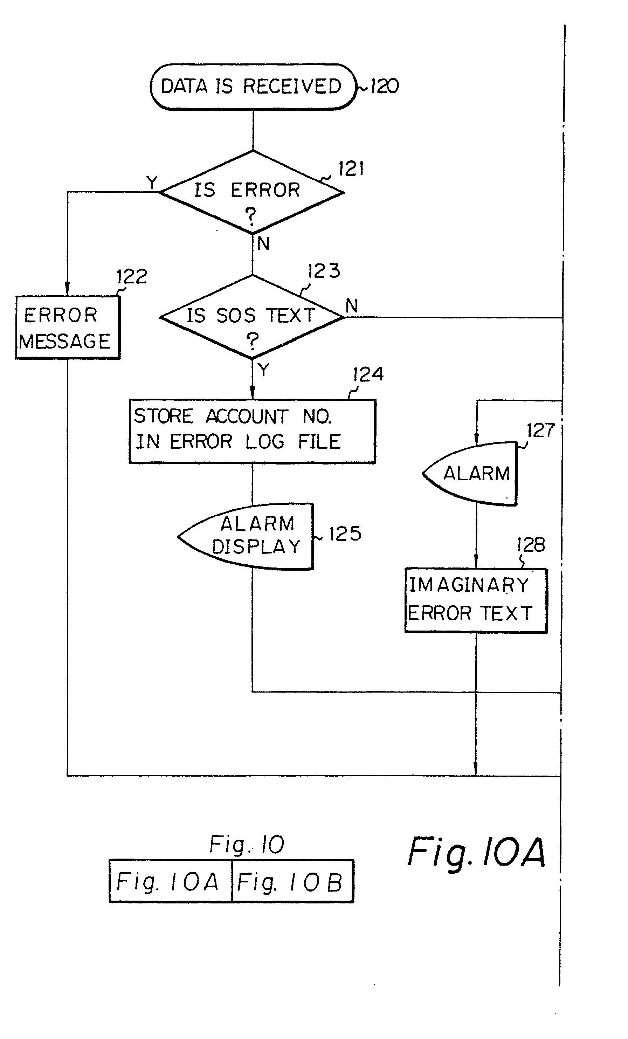

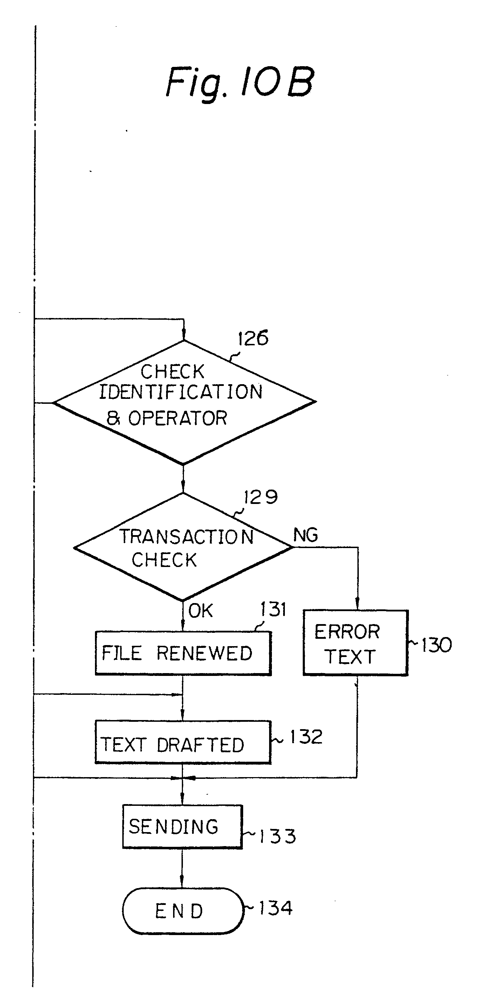

Figure 10 is a flow chart showing the operation in the center side. Data is received in block 120, and block 121 then determines whether or not an error is included in the received data. When an error is included in the data, an error message is added in block 122. When an error is not included, the data is examined in block 123 to determine whether or not the special code (SOS text) is included. When the special code is included in the data, the account number thereof is stored in the error log file in block 124, and an alarm is displayed in block 125. When a special code is not included, the identification and the operator of the input data are checked in block 126. When the data checked in block 126 is defective, an alarm is displayed in block 127, and an imaginary (error) text is drafted in block 128 and sent out.

When the data checked in block 126 is good, the transaction is checked in block 129. If the result of the data check in block 129 is defective, the imaginary (error) text is drafted in block 130.

When the result of the data check in block 129 is good, the account file is renewed in block 131, and the text is drafted in block 132. When the text is drafted in block 132, the amount of the false funds received is included in the text.

The text drafted in block 132, the error message drafted in block 122, and the error text drafted in block 130 are sent to the terminal via the send process in block 133.

As mentioned previously, according to the present invention, when forced to carry out the processing of a false amount of funds received in the monetary transaction, by using the portable monetary transaction device, the client liaison staff can inform the center of an abnormal status while processing a transaction seemingly in a normal manner, keeping this fact secret from the criminal, and ensuring the personal safety of the staff. This will also prevent the criminal from later withdrawing the false funds from the bank.

## Claims

1. A safety system for a transaction system in which a transaction device (31) having an input portion (36), an output portion (38) and a remote processing device (35) having a client file (46) are connected by a circuit (32,33) so that the processing device (35) processes data fed from the transaction device (31); the safety system being characterised by means (40) in the transaction device (31) for sending an alarm signal (E) without being apparent in the transaction device when an improper transaction is carried out; controlling means (39) for operating the alarm signal (E) sending means (40) when a predetermined special code signal (C) is received from the input portion (36); a monitoring device (42) geographically separated from the transaction device (31) for monitoring the transaction device (31) and outputting an alarm indication upon receipt of the alarm signal (E); and, result sending means (43) for sending to the output portion (38) of the transaction device (31) the transaction result depending upon the transaction data supplied by the input portion (36) regardless of whether the transaction data includes the alarm signal (E).

2. A system according to claim 1, in which the processing device (35) includes file control means for preventing renewal of the client file (46) when the alarm signal (E) is received.

3. A system according to claim 1 or 2, in which the transaction device (31) includes a connecting portion (32,33) which connects the transaction device (31) to the processing device (35) via a subscriber's telephone line (34), and a case which stores the input portion (36), the output portion (38), and the connecting portion (32,33), and which is portable.

4. A system according to any of the preceding claims, in which the transaction device (31) includes buffer means (39) which temporarily store the input transaction data from the input portion (36); means (41) for collectively sending the transaction data (D) stored in the buffer means (39) when the input of the transaction data concerning unit transactions is completed; and controlling means (40) which stores the predetermined type of alarm signal (E) in the buffer means (39) when the predetermined special code signal (C) is received; and in that the alarm signal (E) is sent together with the transaction data (D) stored in the buffer means (39) to the processing device (35) by the sending means (40).

5. A system according to any of the preceding claims, in which the special code signal is included in the transaction data which is necessary to the transaction of a deposit using a passbook (37), and the discriminating portion (40) discriminates whether or not the special code signal (C) exists in the transaction data which is input during the transaction.

6. A system according to any of the preceding claims, in which the output portion (38) includes a printing device (45) which prints and outputs the result of the transaction on to a passbook (37).

7. A system according to any preceding claim, characterised in that the processing device (35) comprises discriminating means (43) which discriminates whether or not the required transaction included in the transaction data (D) sent out from the transaction device (31) is correct; detecting means (42) which detects the alarm signal (E) in the received data; alarm output means including a display device (44) which outputs the alarm signal (E); and means for sending a response text (G) for the received transaction data (D) to the transaction device (31).

**Revendications**

1. Système de sécurité pour système de transactions dans lequel un dispositif de transaction (31), ayant une partie d'entrée (36), une partie de sortie (38) et un dispositif de traitement à distance (35) ayant un fichier clients (46), connectés par un circuit (32, 33) de façon à ce que le dispositif de traitement (35) traite les données fournies par le dispositif de transaction (31), le système de sécurité étant caractérisé par des moyens (40) dans le dispositif de transaction (31) pour émettre un signal d'alarme (E) qui n'est pas apparent dans le dispositif de transaction quand une transaction impropre est exécutée ; des moyens de commande (39) pour faire fonctionner le signal d'alarme (E), des moyens d'émission (40) d'un signal d'alarme (E) quand un code spécial prédéterminé (C) est reçu par la partie d'entrée (36) ; un dispositif de surveillance (42) géographiquement séparé du dispositif de transaction (31) pour surveiller le dispositif de transaction (31) et sortir une indication d'alarme à la réception du signal d'alarme (E) ; et, des moyens d'émission des résultats (43) pour émettre vers la partie de sortie (38) du dispositif de transaction (31) le résultat de transaction selon les données de transaction fournies par la partie d'entrée (36) sans tenir compte du fait que les données de transaction comprennent ou non le signal d'alarme (E).

2. Système selon la revendication 1, dans lequel le dispositif de traitement (35) comporte des moyens de commande de fichier pour interdire la remise à jour du fichier clients (46) quand le signal d'alarme (E) est reçu.

3. Système selon la revendication 1 ou 2, dans lequel le dispositif de transaction (31) comporte une partie de connexion (32, 33) qui connecte le dispositif de transaction au dispositif de traitement (35) via la ligne téléphonique (34) d'un abonné et un boîtier qui comporte la partie d'entrée (36), la partie de sortie (38), et la partie de connexion (32, 33) et qui est portable.

4. Système selon l'une quelconque des revendications précédentes, dans lequel le dispositif de transaction (31) comporte des moyens (39) tampon qui stockent temporairement les données de transaction entrées par la partie d'entrée (36) ; des moyens (41) pour émettre collectivement, les données de transaction (D) stokées dans les moyens tampon (39) quand l'entrée des données de transaction concernant des unités est exécutée ; et des moyens de commande (40) qui stockent le type prédéterminé du signal d'alarme (E) dans les moyens tampon (39) quand le signal (C) de code spécial prédéterminé est reçu ; en ce que le signal d'alarme (E) est émis en même temps que les données de transaction (D) stokées dans les moyens tampon (39) vers le dispositif de traitement (35) par les moyens d'émission (40).

5. Système selon l'une quelconque des revendication précédentes, dans lequel le signal de code spécial est inclus dans les données de transaction qui sont nécessaires à la transaction par dépôt en utilisant un carnet de banque (37), et en ce que la partie de test (40) détermine si oui ou non le code spécial (C) existe dans les données de transaction qui ont été saisies pendant la transaction.

6. Système selon l'une quelconque des revendications précédentes, dans lequel la partie de sortie (38) comporte un dispositif d'impression (45) qui imprime et fournit en sortie le résultat de la transaction sur un carnet de banque (37).

7. Système selon l'une quelconque des revendications précédentes, caractérisé en ce que le dispositif de traitement (35) comporte des moyens de test (43) qui déterminent si oui ou non la transaction demandée comprise dans les données de transaction (D) émises par le dispositif (31) de transaction est correcte ; des moyens de détection (42) qui détectent le signal d'alarme (E) parmi les données reçues ; des moyens de sortie d'alarme comprenant un dispositif d'affichage (44) qui fournit en sortie le signal d'alarme (E) ; et des moyens pour émettre un texte de réponse (G) pour les données de transaction reçues (D) vers le dispositif de transaction (31).

**Ansprüche**

1. Sicherheitssystem für ein Transaktionssystem, bei welchem eine Transaktionsvorrichtung (31) einen Eingabeabschnitt (36) hat, einen Ausgabeabschnitt (38) und eine entfernte Bearbeitungsvorrichtung (35), die eine Kundendatei (46) hat, die über eine Schaltung (32, 33) so verbunden ist, daß die Bearbeitungsvorrichtung (35) Daten bearbeitet, die von der Transaktionsvorrichtung zugeführt werden; bei dem ein Sicherheitssystem verwendet wird, gekennzeichnet durch Einrichtungen (40) in der Transaktionsvorrichtung (31), um ein Alarmsignal (E), ohne in der Transaktionsvorrichtung zu erscheinen, zu senden, wenn eine falsche Transaktion durchgeführt wird; Steuereinrichtungen (39), zum Betätigen der Alarmsignal-(E)-Sendeeinrichtung (40), wenn ein vorbestimmtes Spezialcodesignal (c) von dem Eingangsabschnitt (36) empfangen wird; eine Monitorvorrichtung (42), die geographisch von der Transaktionsvorrichtung (31) getrennt ist, um die Transaktionsvorrichtung (31) zu überwachen, und bei Empfang des Alarmsignals (E) eine Alarmsignalanzeige auszugeben; und, Ergebnissendeeinrichtungen (43), um zu dem Ausgangsabschnitt (38) der Transaktionsvorrichtung (31) das Transaktionsergebnis zu senden, abhängig von den Transaktionsdaten, die von dem Eingabeabschnitt (36) geliefert werden, unabhängig davon, ob die Transaktionsdaten das Alarmsignal (E) enthalten.

2. System nach Anspruch 1, bei dem die Bearbeitungsvorrichtung (35) eine Dateisteuereinrichtung zur Verhinderung der Erneuerung der Kundendatei (46), wenn das Alarmsignal (E) empfangen wird, enthält.

3. System nach Anspruch 1 oder 2, bei dem die Transaktionsvorrichtung (31) einen Verbindungsabschnitt (32, 33) enthält, der die Transaktionsvorrichtung (31) mit der Bearbeitungsvorrichtung (35) über eine Teilnehmertelefonleitung (34) verbindet, und ein Gehäuse, welches den Eingabeabschnitt (36), den Ausgabeabschnitt (38) und den Verbindungsabschnitt (32, 33) speichert und portabel ist.

4. System nach einem der vorhergehenden Ansprüche, bei dem die Transaktionsvorrichtung (31) Puffereinrichtungen (39) enthält, welche temporär die Eingabetransaktionsdaten von dem Eingangsabschnitt (36) speichern; Einrichtungen (41) zum kollektiven Senden der Transaktionsdaten (D), die in den Puffereinrichtungen (39) gespeichert sind, wenn die Eingabe der Transaktionsdaten betreffend Einheitstransaktionen beendet ist; und Kontrolleinrichtungen (41), welche den vorbestimmten Typ des Alarmsignals (E) in den Puffereinrichtungen (39) speichern, wenn das vorbestimmte Spezialcodesignal (C) empfangen wird; und daß das Alarmsignal (E) zusammen mit den Transaktionsdaten (D), die in den Puffereinrichtungen (39) gespeichert sind, von den Sendeeinrichtungen (40) zu der Bearbeitungsvorrichtung (35) gesendet werden.

5. System nach einem der vorhergehenden Ansprüche, bei dem das Spezialcodesignal in den Transaktionsdaten enthalten ist, was notwendig ist für die Transaktion einer Einlage unter Verwendung eines Sparbuches (37), und der Diskriminierungsabschnitt (40) diskriminiert, ob das Spezialcodesignal (C) in den Transaktionsdaten, welche während der Transaktion eingegeben werden, enthalten ist oder nicht.

6. System nach einem der vorhergehenden Ansprüche, bei dem der Ausgabeabschnitt (38) eine Druckvorrichtung (45) enthält, welche das Ergebnis der Transaktion in das Sparbuch (37) druckt und ausgibt.

7. System nach einem der vorhergehenden Ansprüche, dadurch gekennzeichnet, daß die Bearbeitungsvorrichtung (35) Diskriminierungseinrichtungen (43) umfaßt, die diskriminieren, ob die angeforderte Transaktion, die in den Transaktionsdaten (D) enthalten ist, die von der Transaktionsvorrichtung (31) gesendet wurden, korrekt ist; Detektiereinrichtungen (42), welche das Alarmsignal (E) in den empfangenen Daten detektieren; Alarmausgabeeinrichtungen, die eine Displayvorrichtung (44) enthalten, welche das Alarmsignal (E) ausgibt; und Einrichtungen zum Senden eines Antworttextes (G) für die empfangenen Transaktionsdaten (D) an die Transaktionsvorrichtung (31).

# Fig. 1

EP 0 117 124 B1

## Fig. 2

Fig. 3A

Fig. 3

| Fig. 3A | Fig. 3B |

TEN KEY 29

| 7 | 8 | 9 | CLEAR | ITEM CODE | RECEIPTS | |
| 4 | 5 | 6 | ▲ | TRAN-SACTION CODE | PAYING | |
| 1 | 2 | 3 | ▼ | ACCOUNT NO. | RECEIVED AMOUNT | PAYING IN |
| 0 | · | — | ; | BALANCE DEPOSIT NO. | ANOTHER BRANCH CODE | ENTER |

EP 0 117 124 B1

# Fig. 3 B

FUNCTION KEY 30

| | | | | | | |
|---|---|---|---|---|---|---|
| | | | | | | |
| SPECIAL CODE | | | | | | |
| IN- SPECTION | | | | | | |
| NOTE | | | | | | |

EP 0 117 124 B1

Fig. 4

*Fig. 5*

| Fig. 5A | Fig. 5B |
|---------|---------|

# Fig. 5A

40,41

|  | TRANSACTION CONTROL PROGRAM |
|---|---|
| ROM | INPUT/OUTPUT CONTROL PROGRAM |

~39

|  | WORK AREA |
|---|---|
|  | SENDING AND RECEIVING BUFFER |
|  | IDENTIFICATION STORING PORTION |
| RAM | DISPLAY CODE TABLE |
|  | SOS TEXT |
|  | INPUT AND OUTPUT FUNDS COUNTER |
|  | JOURNAL RECORD PORTION (ACCOUNT. ITEM. AMOUNT. NAME CENTER NO.) |

41

CLOCK

47

# Fig. 5B

CPU ~ 39, 40, 41

DISPLAY CONTROL → L C D ~ 48
48a

CONTROL BUFFER ← MAGNETIC STRIP PORTION ~ 38
38a

49

MAC ← PORT ← KEYBOARD ~ 36
36a

PRINTER CONTROL → INSERTER PRINTER ~ 45
45a

LINE CONTROL ← ACOUSTIC COUPLER ~ 32
32a

PORT
47a

## Fig. 6

CPU ~43

TELEPHONE LINE 34

COMMUNICATION CONTROLLING PORTION
50

TRANSACTION MANAGEMENT PROGRAM

TERMINAL IDENTIFICATION ~43

OPERATOR IDENTIFICATION

WORK AREA

KEYBOARD DISPLAY
44

CLIENT FILE ~46a

ERROR LOG FILE ~46b

EP 0 117 124 B1

# Fig. 7A

| ACCOUNT NO. | ADDRESS | NAME | |
|---|---|---|---|
| ACCOUNT NO. | BALANCE | UNRENEWED DATA | |
| A | ′′ | ′′ | |
| B | ′′ | ′′ | |
| | | | |

# Fig. 7B

| DEFECTIVE ACCOUNT NO. | ACCIDENT, CARD LOST, DEFECTIVE ITEM |
|---|---|
| A | |
| B | |
| | |

## Fig. 8A-1

| | KEYBOARD<br>PASSBOOK } INPUT | | DISPLAY |
|---|---|---|---|
| ① SELECTS THE ITEM | 02 | ITEM CODE | ITEM CODE 02 |
| ② READS THE PASSBOOK M S | | PASS BOOK | ACCOUNT NO. 1231234567 |
| ③ ENTERS THE DEPOSIT NO. | 03 005<br>DEPOSIT NO. CODE | NOTE | NOTE 1 03005 |
| ④ ENTERS THE TRANSACTION CODE | 016 | TRAN-SACTION CODE | TRANSACTION CODE 016<br>TAX CLASSIFICATION |

EP 0 117 124 B1

# Fig. 8A-2

| | | | |
|---|---|---|---|
| ⑤ ENTERS THE TAX CLASSIFICATION | 3 | ENTER | TAX CLASSIFICATION 3 TERM |
| ⑥ ENTERS THE TERM | 24551 | ENTER | TERM 24551 DATA OF MATURITY |
| ⑦ ENTERS THE DATE OF MATURITY | 840401 | ENTER | DATE OF MATURITY 84-04-01 CLASSIFICATION |
| ⑧ ENTERS TRANSACTION CLASSIFICATION | 1 | ENTER | CLASSIFICATION 1 |
| ⑨ NO ITEM ENTERED SKIPS | | ENTER | CLASSIFICATION 1 INITIAL DATE |

EP 0 117 124 B1

# Fig. 8B-1

KEYBOARD ⎱ INPUT
PASSBOOK ⎰

DISPLAY

⑩ ENTERS NO ITEM SKIPS

ENTER

CLASSIFICATION  1

NO INDICATION

⑪ ENTERS THE RECEIVED AMOUNT

500000   RECEIVED

RECEIVED AMOUNT 500,000

⑫ COMPLETED

FINISH

PROCESSING

⑬ PRINTS ON THE SLIP

58-4-20  1,500,000
- - - - - - - - - - - - - -
- - - - - - - - - - - - - -
- - - - - - - - - - - - - -

SET  THE  SLIP

EP 0 117 124 B1

# Fig. 8B-2

⑭ PRINTS ON THE PASSBOOK

58-4-20  1,500,000

- - - - - - - - - - - - -
- - - - - - - - - - - - -
- - - - - - - - - - - - -

EXTRACT MATERIAL

SET PASSBOOK

⑮ WRITES THE MS OF THE PASSWORD

EXTRACT MATERIAL

WRITE TO ME PASSBOOK

⑯ REREADS THE MS OF THE PASSWORD

READ THE PASSBOOK

⑰ INDICATES THAT THE TRANSACTION HAS BEEN COMPLETED NORMALLY

END OF OUTPUT

EP 0 117 124 B1

# Fig. 9A

( TERMINAL SIDE )　　　　　　　　　( CENTER SIDE )

```
┌─────────────────┐                    ┌─────────────────┐
│   POWER  ON     │~90a                │   POWER  ON     │
└─────────────────┘                    └─────────────────┘
         │                                      ╎  90b
         ▼                                      ╎
┌─────────────────┐                             ╎
│ CONFIRM         │                             ╎
│ REGISTRATION OF │~91                          ╎
│ OPERATOR        │                             ╎
└─────────────────┘                             ╎
         │                                      ▼
         ▼                             ┌─────────────────┐ 94
┌─────────────────┐                    │ CONFIRMATION    │
│ TRANSACTION     │~92                 │ OF TRANSACTION  │
│ DATA INPUT      │                    └─────────────────┘
└─────────────────┘                             │        95
         │              93                       ▼
         ▼                             ┌─────────────────┐
┌─────────────────┐                    │ FILE RENEWED    │
│   SENDING       │     HOST           │ SOS  PROCESSING │
└─────────────────┘     COMPUTER       └─────────────────┘
                                                │        96
                                                 ▼
                                       ┌─────────────────┐
                                       │ TEXT  DRAFTED   │
                                       │   SENDING       │
                                       └─────────────────┘
                                                │
┌─────────────────┐                             ▼
│ RECEIVED TEXT   │~97
│ PROCESSING      │
└─────────────────┘
         │
         ▼
┌─────────────────┐
│  PRINTED OUT    │~98
└─────────────────┘
         │
         ▼
   (   END   )~99
```

21

Fig. 9B-1

Fig.9B

| Fig. 9B-1 |
| Fig. 9B-2 |

TRANSACTION INPUT PROCESS ~100

BUFFER INPUT DATA 101

MONITOR DISPLAY ~102

ITEM KEY ? 103

SOS DATA ? 104

SET SOS TEXT IN BUFFER 105

NUMERIC CHECK OK ? 106

EP 0 117 124 B1

107 — ERASE MONITOR

ERROR PROCESSING
113

108 — SET INPUT BUFFER DATA & FUNCTION KEY DATA IN SENDING BUFFER

109 — COMPILE INPUT DATA AND DISPLAY SAME

110

N — INPUT COMPLETE ?

111 — COUPLER SET — N

Y

112 — DATA IS SENT

*Fig. 9B-2*

Fig. 10

| Fig. 10A | Fig. 10B |
|----------|----------|

Fig. 10A

# Fig. IO B

CHECK IDENTIFICATION & OPERATOR ~126

TRANSACTION CHECK ~129

NG

OK

FILE RENEWED ~131

ERROR TEXT ~130

TEXT DRAFTED ~132

SENDING ~133

END ~134